# EUROPÄISCHE PATENTANMELDUNG

(11) **EP 4 134 718 A1**
(43) Veröffentlichungstag der Anmeldung: **15.02.2023**
(21) Anmeldenummer: 22188791.2
(22) Anmeldetag: 04.08.2022
(51) Int. Cl.: G02B 6/44, H02B 1/50

(54) **SELBSTTRAGENDER KORPUS FÜR EINEN OUTDOOR-VERTEILERKASTEN UND OUTDOOR-VERTEILERKASTEN MIT EINEM SOLCHEN KORPUS**

(30) Priorität: 12.08.2021 DE 102021121038
(71) Anmelder: Langmatz GmbH, 82467 Garmisch-Partenkirchen (DE)
(72) Erfinder: Hoffmann, Klaus, 82467 Garmisch-Partenkirchen (DE); Böswald, Martin, 82467 Garmisch-Partenkirchen (DE); Hutter, Michael, 82497 Unterammergau (DE)
(74) Vertreter: Prinz & Partner mbB

(57) **Zusammenfassung**

Die Erfindung betrifft einen selbsttragenden Korpus (10) für einen Outdoor-Verteilerkasten, insbesondere für einen Glasfaser-Netzverteiler, mit einer Rückwand (12) , zwei Seitenwänden (14, 16) und einem Dach (18), wobei der Korpus (10) einstückig aus Kunststoff besteht und die Seitenwände (14, 16) und das Dach (18) jeweils mit einer Innenwand (14I, 16I, 18I) und einer Außenwand (14A, 16A, 18A) ausgeführt sind, wobei jede Innenwand (14I, 16I, 18I) mit der ihr zugeordneten Außenwand (14A, 16A, 18A) durch mehrere Versteifungsstege (22, 24, 26) verbunden ist. Die Erfindung betrifft auch einen Outdoor-Verteilerkasten mit einem solchen Korpus (10) und einer Bodenplatte (44), die mit dem Korpus (10) verschraubt ist.

## Beschreibung

Die Erfindung betrifft einen selbsttragenden Korpus für einen Outdoor-Verteilerkasten, insbesondere für einen Glasfasernetzverteiler, sowie einen Outdoor-Verteilerkasten mit einem solchen Korpus.

Ein solcher Verteilerkasten weist üblicherweise einen Sockel auf, auf dem zwischen zwei Säulen eine Montageplatte montiert ist, auf der die Bauteile für die Zugentlastung und Sortierung der Glasfaserkabel angebracht sind. Auf dem Sockel ist auch ein Gehäuse montiert, das alle Bauteile wetterfest umgibt.

Die Aufgabe der Erfindung besteht darin, einen Verteilerkasten mit einfacherem Aufbau, aber höherer Festigkeit und höherer Stabilität zu schaffen.

Zur Lösung dieser Aufgabe ist erfindungsgemäß ein selbsttragender Korpus für einen Outdoor-Verteilerkasten vorgesehen, insbesondere für einen Glasfaser-Netzverteiler, mit einer Rückwand, zwei Seitenwänden und einem Dach, wobei der Korpus einstückig aus Kunststoff besteht und die Seitenwände und das Dach jeweils mit einer Innenwand und einer Außenwand ausgeführt sind, wobei jede Innenwand mit der ihr zugeordneten Außenwand durch mehrere Versteifungsstege verbunden ist. Die Aufgabe wird auch gelöst durch einen Outdoor-Verteilerkasten mit einem solchen Korpus und einer Bodenplatte, die mit dem Korpus verschraubt ist.

Die Erfindung beruht auf dem Grundgedanken, in dem Korpus zwei Funktionen zusammenzuführen, die bisher getrennt erfüllt wurden. Im Stand der Technik hat das Gehäuse das "Innenleben" des Verteilerkastens vor Umwelteinflüssen geschützt, während das Innenleben des Verteilerkastens auf dem Sockel und damit unabhängig vom Gehäuse montiert war. Erfindungsgemäß ist der Korpus nun selbsttragend ausgeführt, sodass das Innenleben des Verteilerkastens direkt am Korpus montiert werden kann. Abgesehen von der hohen Festigkeit des selbsttragenden Korpus, die dies ermöglicht, ist es auch der Abstand der Innenwände von den Außenwänden, der es ermöglicht, Bauteile direkt mit den Innenwänden zu verschrauben, ohne dass es das Risiko einer Beschädigung der Außenwand gibt. Es ist auch nicht erforderlich in die Seitenwände bei der Herstellung des Korpus irgendwelche Befestigungsmittel einzugießen oder zu integrieren; es hat sich als ausreichend herausgestellt, die nötigen Bauteile einfach an die Innenwände anzuschrauben. Zusätzlich ergibt sich durch die Doppelwandigkeit der Seitenwände und des Dachs eine insgesamt höhere Festigkeit und Stabilität, sodass alle Anforderungen hinsichtlich der Standfestigkeit erfüllt werden.

Gemäß einer Ausgestaltung der Erfindung ist vorgesehen, dass die Wandstärke der Versteifungsstege im Bereich des Übergangs in die Außenwand größer ist als mittig zwischen der Innen- und der Außenwand. Auf diese Weise können die auftretenden Belastungen sehr gut in die Außenwand abgeleitet werden.

In mindestens einer Innenwand kann entlang ihres Vorderrandes mindestens eine Ausnehmung vorgesehen sein, in die ein Riegel eines Tür-Verriegelungsmechanismus eingreifen kann. Die Ausnehmung sorgt für eine hohe Haltekraft, ohne dass separate Haltebügel oder anderes montiert werden müssen.

Vorzugsweise ist die Ausnehmung auf Höhe eines Versteifungsstegs angeordnet, wobei der Versteifungssteg im Bereich der Ausnehmung ausgespart ist. Hierdurch wird die bereitgestellte Haltekraft nochmal erhöht, da ein Teil der gegebenenfalls auftretenden Belastungen über den Versteifungssteg in eine größere Fläche sowohl der Innenwand als auch der Außenwand eingeleitet wird.

Gemäß einer Ausgestaltung der Erfindung ist vorgesehen, dass die Versteifungsstege des Daches auf ihrer Vorderseite mit einem Schlitz versehen sind, in den ein Rand einer Tür eingreifen kann. Hierdurch ergibt sich im geschlossenen Zustand der Tür eine formschlüssige Verbindung zum Dach und zum Korpus, die für eine höhere Festigkeit und Stabilität sorgt.

Gemäß einer Ausgestaltung der Erfindung sind die Vorderränder der Innenwände gegenüber den Vorderrändern der Außenwände zurückgesetzt, sodass die Tür bündig innerhalb des Korpus aufgenommen werden kann. Anders ausgedrückt: Die Tür ist im geschlossenen Zustand innerhalb des Korpus aufgenommen, was ebenfalls die Stabilität des Verteilerkastens erhöht.

In den Innenwänden der beiden Seitenwände können entlang ihres unteren Randes mehrere Befestigungsöffnungen für Anschlussbleche vorgesehen sein, mit denen der Korpus mit einer Bodenplatte und/oder dem Sockel werden kann. Auf diese Weise können die auftretenden Belastungen unmittelbar in den Sockel abgeleitet werden.

Gemäß einer Ausgestaltung der Erfindung weist die Tür einen Verriegelungsmechanismus auf, der an jedem Seitenrand der Tür mindestens einen Riegel aufweist, der mit einer Ausnehmung in einer der Innenwände bzw. mit einer Ausnehmen an der Bodenplatte zusammenwirken kann. Mit diesem Verriegelungsmechanismus ist die Tür, wenn sie geschlossen ist, an allen Seiten fest mit dem Korpus verbunden, sodass eine besonders hohe Sicherheit gegen ein gewaltsames Aufbrechen der Tür gegeben ist.

An der Tür sind vorzugsweise mehrere Anschraubpunkte für ein Glasfaser-Kassettensystem vorgesehen, sodass dieses mit geringem Aufwand montiert werden kann.

An den Innenwänden der Seitenwände des Verteilerkastens kann ein Montageblech für ein Glasfaser-Sortiersystem angebracht sein, ohne dass eine direkte Verbindung mit dem Sockel des Verteilerkastens erforderlich ist.

Die Erfindung wird nachfolgend anhand eines Ausführungsbeispiels erläutert, das in den beigefügten Zeichnungen dargestellt ist. In diesen zeigen:
- Figur 1 eine perspektivische Ansicht des Korpus mit Tür;
- Figur 2 eine zweite perspektivische Ansicht des Korpus mit Tür;
- Figur 3 eine Vorderansicht des Korpus;
- Figur 4 eine perspektivische Rückansicht des Korpus;
- Figur 5 eine perspektivische Seitenansicht des Korpus;
- Figur 6 eine perspektivische Vorderansicht des Korpus;
- Figur 7 eine Ansicht eines in vertikaler Richtung geschnittenen Korpus;
- Figur 8 eine Ansicht von unten auf einen Korpus;
- Figur 9 einen in horizontaler Richtung geschnittenen Korpus mit einer Blickrichtung von oben, wobei der Korpus mit einer Tür versehen ist;
- Figur 10 einen in vertikaler Richtung geschnittenen Korpus mit Tür;
- Figur 11 in einer perspektivischen Ansicht einen Verteilerkasten mit Innenausbau; und
- Figur 12 in einem horizontalen Schnitt einen Verteilerkasten mit Innenausbau mit Blickrichtung von unten.

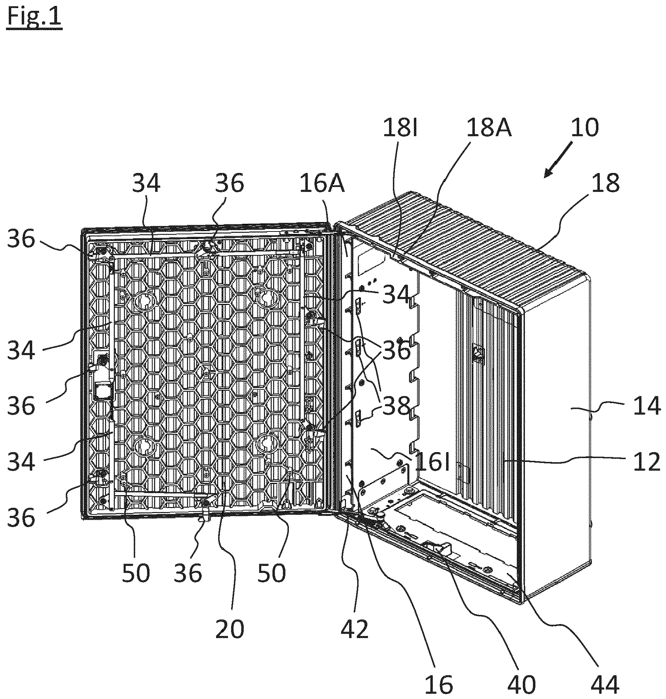

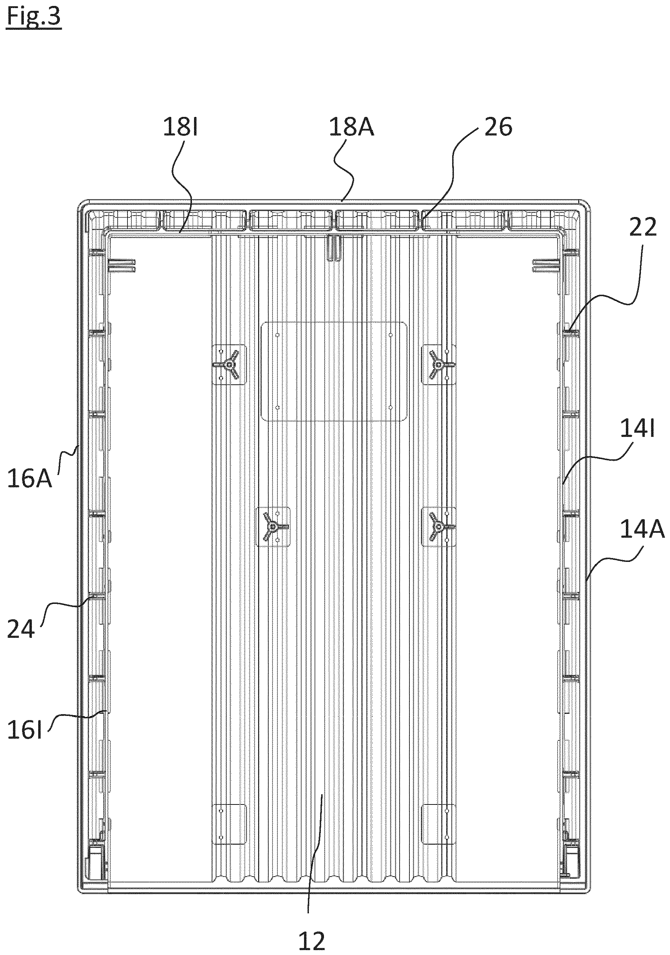

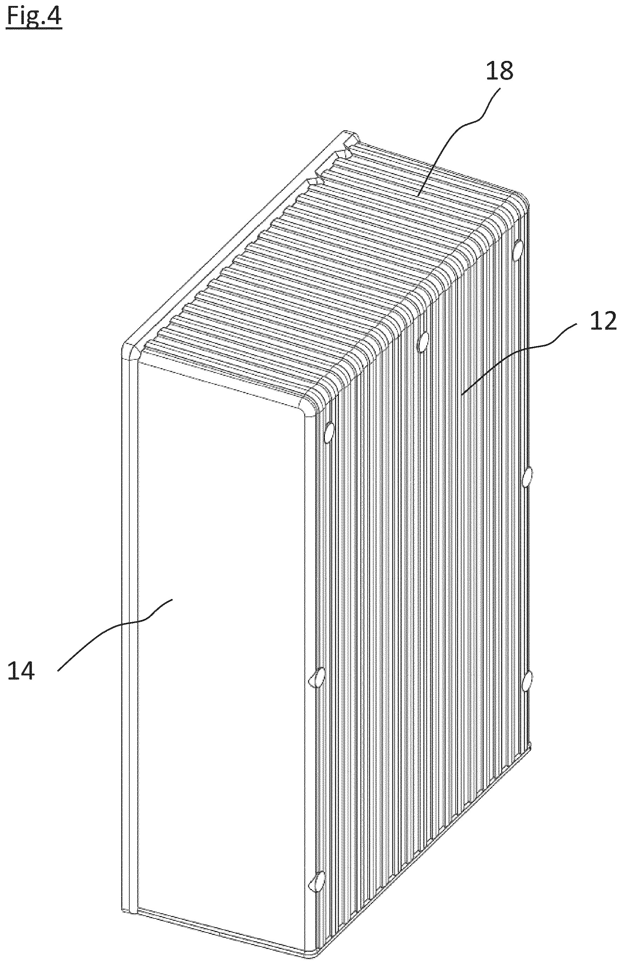

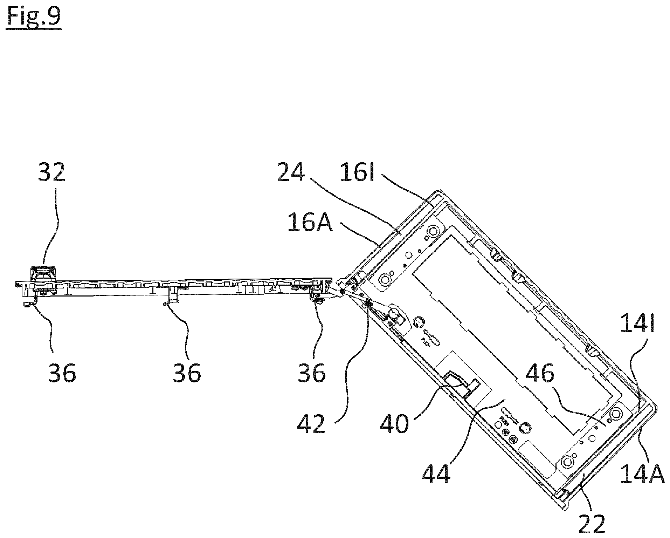

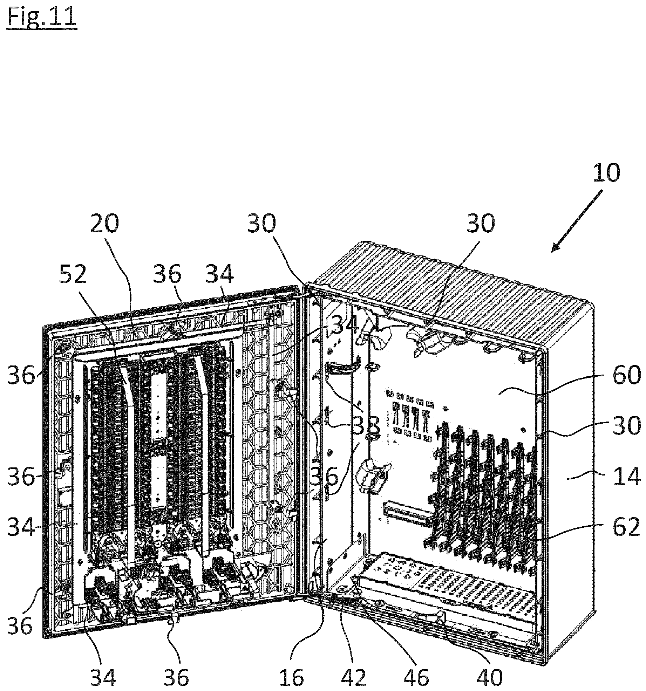

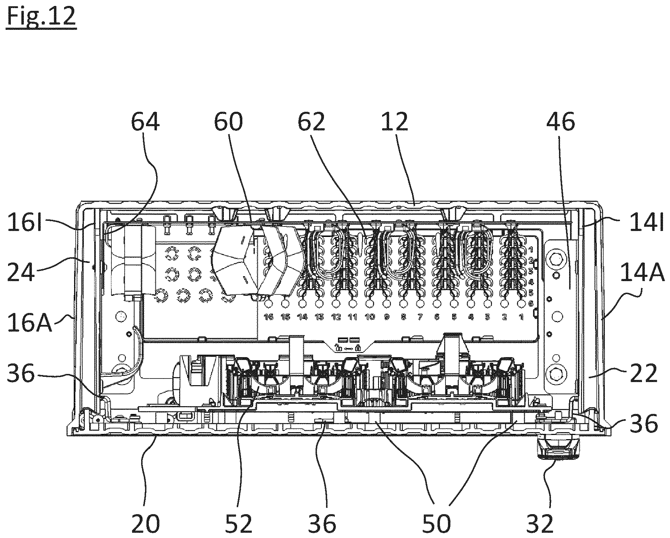

Nachfolgend wird anhand der Figuren 1 bis 10 der grundsätzliche Aufbau eines selbsttragenden Korpus für einen Outdoor-Netzverteiler beschrieben. In den Figuren 11 und 12 ist dann der Outdoor-Netzverteiler gezeigt, also der Korpus mit "Innenausbau", der hier zum Anschließen von Glasfaserleitungen vorgesehen ist.

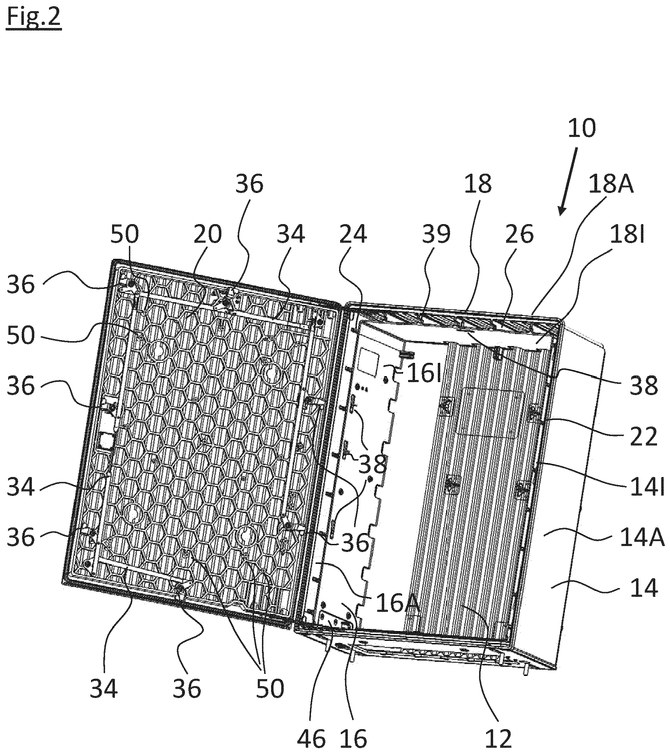

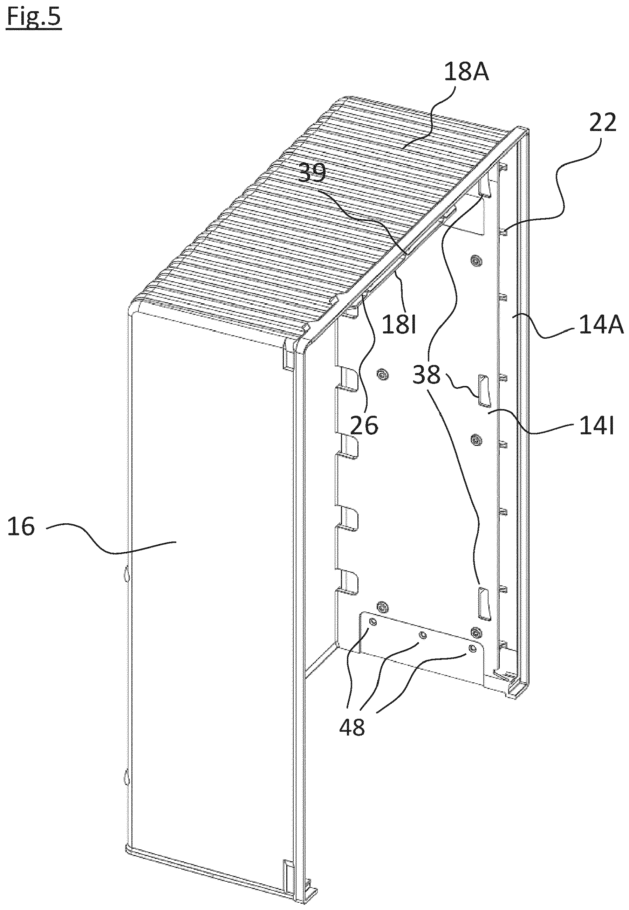

Der Korpus 10 weist eine Rückwand 12, zwei Seitenwände 14, 16 und ein Dach 18 auf. Auf diese Weise ist ein allgemein quaderförmiges Gehäuse gebildet (siehe Figur 5), wobei die Vorderseite von einer Tür 20 (siehe Figuren 1 und 2) geschlossen werden kann. Die Unterseite des Gehäuses ist offen.

Soweit hier auf "oben", "unten", "vorne", "hinten" oder ähnliche Angaben Bezug genommen wird, wird hier auf einen Verteilerkasten im montierten Zustand Bezug genommen. "Oben" ist also die Seite, auf der sich das Dach 18 befindet, während sich "unten" der Sockel befindet, auf dem der Korpus 10 montiert ist. "Vorne" ist die Seite, auf der sich die Tür 20 befindet, und "hinten" ist die Seite, auf der sich die Rückwand 12 befindet.

Der Korpus 10 ist ebenso wie die Tür 20 ein chemisch geschäumtes Bauteil aus Kunststoff.

Ein Material, das verwendet werden kann, ist glasfaserverstärktes Polycarbonat. Der Glasfaseranteil kann im Bereich von 5 - 6 % betragen.

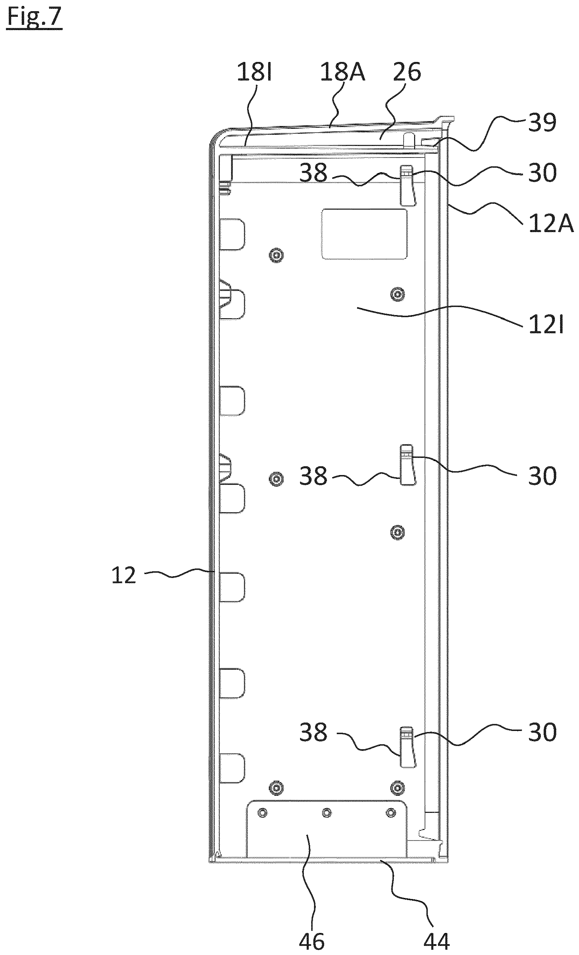

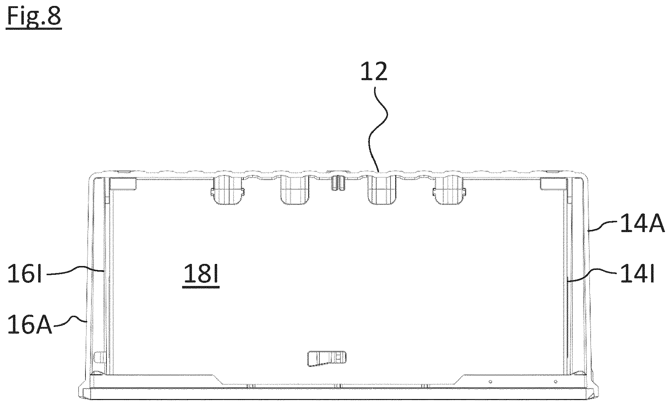

Die Rückwand 12 ist einwandig ausgeführt (siehe Figuren 7 und 8). Um die Festigkeit zu erhöhen, kann die Rückwand 12 mit einem wellenförmigen Profil ausgeführt sein.

Sowohl die beiden Seitenwände 14, 16 als auch das Dach 18 sind doppelwandig ausgeführt. Sie weisen jeweils eine Innenwand und eine Außenwand auf, wobei diese mit Versteifungsstegen miteinander verbunden sind.

Aufgrund der doppelwandigen Ausführung besteht also die Seitenwand aus einer Außenwand 14A und einer Innenwand 14I, die durch mehrere Versteifungsstege 22 miteinander verbunden sind. In gleicher Weise besteht die Seitenwand 16 aus einer Außenwand 16A und einer Innenwand 16I, die durch mehrere Versteifungsstege 24 miteinander verbunden sind. Im gezeigten Ausführungsbespiel werden jeweils acht Versteifungsstege 22, 24 verwendet.

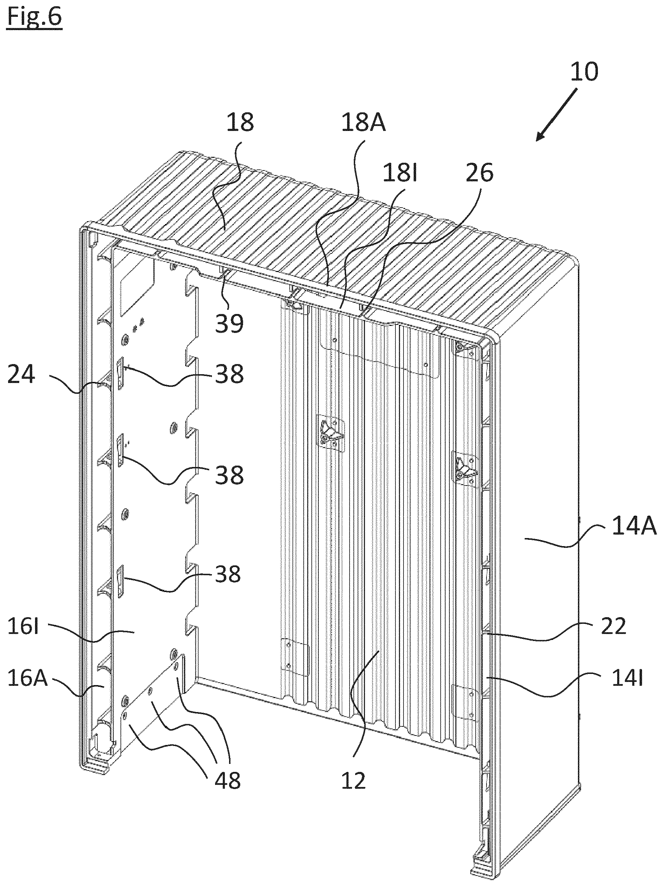

Das Dach 18 besteht aus einer Außenwand 18A und einer Innenwand 18I, die durch mehrere Versteifungsstege 26 (siehe Figur 6) miteinander verbunden sind. Im gezeigten Ausführungsbeispiel werden neun Versteifungsstege 26 verwendet.

Wie insbesondere in Figur 11 zu sehen ist, sind die Versteifungsstege 22, 24, 26 im Bereich des Übergangs in die entsprechende Außenwand und auch die entsprechende Innenwand mit einer größeren Wandstärke ausgeführt als mittig zwischen der Innen- und der Außenwand. Dieser verbreiterte "Fußbereich" ist exemplarisch mit dem Bezugszeichen 30 versehen.

Der Zwischenraum zwischen den Innenwänden und den Außenwänden erweitert sich mit zunehmendem Abstand von der Rückwand 12 hin zur Vorderseite, sodass Entformungsschrägen gebildet sind, die es ermöglichen, den Korpus 10 in einem Spritzwerkzeug herzustellen. Es kann auch vorgesehen sein, dass die Wandstärke der Versteifungsstege 22, 24, 26 sich von der Rückwand 12 zur Vorderseite des Korpus 10 hin verringert, um auch dadurch das Entformen zu unterstützen.

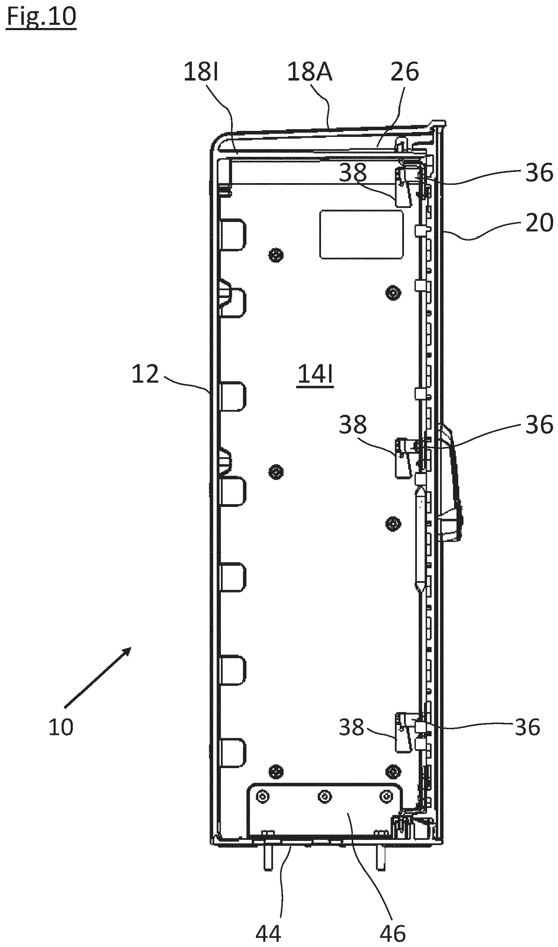

Die Entformungsschrägen können beim Dach 18 dafür genutzt werden, es leicht schräg nach hinten hin abfallen zu lassen (siehe Figur 10), sodass auftreffendes Wasser nach hinten weggeleitet wird, also weg von der Tür 20.

Die Tür 20 ist mit einem Verriegelungsmechanismus versehen, der ein Schloss 32, mehrere Übertragungsstangen 34 und mehrere Riegel 36 aufweist. An jedem Seitenrand der Tür ist mindestens ein Riegel 36 angeordnet.

Die Riegel 36 können mit Ausnehmungen 38 zusammenwirken, die in den Innenwänden 14I, 16I und 18I des Korpus 10 vorgesehen sind. Die Ausnehmungen 38 können beim Schäumen hergestellt werden, sodass keine nachträglichen Bearbeitungsschritte oder Montageschritte erforderlich sind.

Die Ausnehmungen 38 können auf Höhe der Versteifungsstege 22, 24 angeordnet sein (siehe insbesondere Figur 7), sodass die von den Riegeln ausgeübte Belastung über die Versteifungssteige 22, 24 großflächig abgeleitet werden.

Für den an der Unterkante der Tür 20 angeordneten Riegel kann ein separates Halteblech 40 vorgesehen sein.

Wie insbesondere in Figur 12 zu sehen ist, ist die Tür 20 im geschlossenen Zustand bündig im Korpus 10 aufgenommen, da die Vorderränder der Außenwände 14A, 16A und 18A über die Vorderränder der Innenwände 14I, 16I und 18I überstehen. Die Tür ist dabei durch ein Scharnier 42 so montiert, dass sie um mehr als 90° geöffnet werden kann (siehe Figuren 1, 2, 9 und 11), wodurch das Innere des Verteilers gut zugänglich ist.

Wie insbesondere in den Figuren 6, 7 und 10 zu sehen ist, greift die Tür 20 im geschlossenen Zustand mit ihrem oberen Rand in Schlitze 39 ein, die in den vorderen Abschnitten der Versteifungsstege 26 ausgebildet sind, die die Innenwand 18I mit der Außenwand 18A verbinden. Auf diese Weise ergibt sich dort bei geschlossener Tür eine formschlüssige Verbindung.

An der Unterseite des Korpus 10 ist eine Bodenplatte 44 angebracht, an der ein Gegenhalter 40 angeformt sein kann. Die Bodenplatte 44 stellt den Übergang zum Sockel dar.

Die Bodenplatte 44 ist mit dem Korpus 10 durch zwei Anschlussbleche 46 (siehe insbesondere Figuren 1 und 7) verbunden. Die Anschlussbleche 46 haben einen L-förmigen Querschnitt und sind einem Seitenschenkel direkt an den Innenwänden 14I, 16I angeschraubt. Hierfür sind mehrere Befestigungsöffnungen 48 vorgesehen.

In den Figuren 11 und 12 ist der Korpus mit "Innenleben" bestückt gezeigt, wobei der Verteilerkasten hier ein Glasfaser-Netzverteiler ist.

An der Tür 20 sind mehrere Anschraubpunkte 50 für ein Glasfaser-Kassettensystem 52 vorgesehen.

Im Korpus ist ein Montageblech 60 angebracht, an dem ein Glasfaserkabel-Sortiersystem 62 angerbracht ist. Das Montageblech 60 weist seitlich abgebogene Schenkel 64 auf, die unmittelbar mit den Innenwänden 14I, 16I verschraubt sind. Das Montageblech 60 hat dabei einen Abstand von der Rückwand 12, so dass Bauteile am Montageblech angebracht werden können, ohne dass die Gefahr besteht, die Rückwand 12 zu beschädigen.

Aufgrund der doppelwandigen Konstruktion ist der Korpus 10 insofern selbsttragend, als der Innenausbau vollständig am Korpus angebracht werden kann. Hinsichtlich der fest im Korpus 10 montierten Bauteile ist hierfür das Montageblech vorgesehen, das mit den Seitenwänden des Korpus verschraubt wird. Die an der Tür 20 angebrachten Bauteile sind indirekt mit dem Korpus 10 verbunden, nämlich durch die Scharniere 42 und den Formschluss zwischen der Tür 20 und dem Korpus 10, wenn diese sich in der geschlossenen Position befindet. Der Korpus selbst ist über die Bodenplatte 44 oder gegebenenfalls auch die Anschlussbleche 46 unmittelbar mit dem Sockel verschraubt.

## Patentansprüche

1. Selbsttragender Korpus (10) für einen Outdoor-Verteilerkasten, insbesondere für einen Glasfaser-Netzverteiler, mit einer Rückwand (12) , zwei Seitenwänden (14, 16) und einem Dach (18), wobei der Korpus (10) einstückig aus Kunststoff besteht und die Seitenwände (14, 16) und das Dach (18) jeweils mit einer Innenwand (14I, 16I, 18I) und einer Außenwand (14A, 16A, 18A) ausgeführt sind, wobei jede Innenwand (14I, 16I, 18I) mit der ihr zugeordneten Außenwand (14A, 16A, 18A) durch mehrere Versteifungsstege (22, 24, 26) verbunden ist.

2. Korpus nach Anspruch 1, **dadurch gekennzeichnet, dass** in mindestens einer Innenwand (14I, 16I, 18I) entlang ihres Vorderrandes mindestens eine Ausnehmung (38) vorgesehen ist, in die ein Riegel (36) eines Tür-Verriegelungsmechanismus (32, 34, 36) eingreifen kann.

3. Korpus nach Anspruch 1 oder Anspruch 2, **dadurch gekennzeichnet, dass** die Wandstärke der Versteifungsstege (22, 24, 26) im Bereich des Übergangs in die Außenwand (14A, 16A, 18A) größer ist als mittig zwischen der Innen- und der Außenwand.

4. Korpus nach Anspruch 3, **dadurch gekennzeichnet, dass** die Ausnehmung (38) auf Höhe eines Versteifungsstegs (22, 24, 26) angeordnet ist und der Versteifungssteg (22, 24, 26) im Bereich der Ausnehmung (38) ausgespart ist.

5. Korpus nach einem der vorhergehenden Ansprüche, **dadurch gekennzeichnet, dass** die Versteifungsstege (26) des Daches (18) auf ihrer Vorderseite mit einem Schlitz (39) versehen sind, in den ein Rand einer Tür (20) eingreifen kann.

6. Korpus nach einem der vorhergehenden Ansprüche, **dadurch gekennzeichnet, dass** die Vorderränder der Innenwände (14I, 16I, 18I) gegenüber den Vorderrändern der Außenwände (14A, 16A, 18A) zurückgesetzt sind.

7. Korpus nach einem der vorhergehenden Ansprüche, **dadurch gekennzeichnet, dass** in den Innenwänden (14I, 16I) der beiden Seitenwände (14, 16) entlang ihres unteren Randes mehrere Befestigungsöffnungen (48) für Anschlussbleche (46) vorgesehen sind.

8. Outdoor-Verteilerkasten mit einem Korpus (10) nach einem der vorhergehenden Ansprüche und einer Bodenplatte (44), die mit dem Korpus (10) verschraubt ist.

9. Outdoor-Verteilerkasten nach Anspruch 8, **dadurch gekennzeichnet, dass** eine Tür (20) vorgesehen ist, die im geschlossenen Zustand innerhalb des Korpus (10) aufgenommen ist.

10. Outdoor-Verteilerkasten nach Anspruch 9, **dadurch gekennzeichnet, dass** die Tür einen Verriegelungsmechanismus (32, 34, 36) aufweist, der an jedem Seitenrand der Tür (20) mindestens einen Riegel (36) aufweist, der mit einer Ausnehmung (38) in einer der Innenwände (14I, 16I, 18I) bzw. mit einem Halteblech (40) an der Bodenplatte (44) zusammenwirken kann.

11. Outdoor-Verteilerkasten nach Anspruch 9 oder Anspruch 10, **dadurch gekennzeichnet, dass** an der Tür mehrere Anschraubpunkte (50) für ein Glasfaser-Kassettensystem (52) vorgesehen sind.

12. Outdoor-Verteilerkasten nach einem der Ansprüche 9 bis 11, **dadurch gekennzeichnet, dass** an den Innenwänden (14I, 16I) der Seitenwände (14, 16) ein Montageblech (60) für ein Glasfaserkabel-Sortiersystem (62) angebracht ist.
